# EUROPEAN PATENT APPLICATION

(11) **EP 1 676 747 A1**
(43) Date of publication of application: **05.07.2006**
(21) Application number: 04792034.3
(22) Date of filing: 05.10.2004
(51) Int. Cl.: B60R 1/08

(54) **INTEGRATED MIRROR**

(30) Priority: 08.10.2003 JP 2003349596
(71) Applicant: HONDA MOTOR CO., Ltd., Tokyo 107-8556 (JP)
(72) Inventor: MATSUMOTO, Yoshiyuki Honda R & D Co., Ltd., Saitama 3510193 (JP); UEMATSU, Isao Honda R & D Co., Ltd., Saitama 3510193 (JP); ABE, Masaaki Honda R & D Co., Ltd., Saitama 3510193 (JP); MARUYAMA, Kazuyuki Honda R & D Co., Ltd., Saitama 3510193 (JP); TSUTSUMI, Youjirou Honda R & D Co., Ltd., Saitama 3510193 (JP)
(74) Representative: Herzog, Markus
(86) International application number: PCT/JP2004/014623
(87) International publication number: WO 2005/035314

(57) **Abstract**

An integrated mirror for automobiles through which the driver of an automobile can confirm the situation of vehicles in the rear and side rear with a light burden in the movement of eyes or the recognition of the rear image when the driver changes the lane, for example. The integrated mirror (16) comprises an inside mirror section (18) reflecting the view of the rear part of the inside of the vehicle, an outside mirror section (17) reflecting the view of the outside in the rear of the vehicle, a coupling member (21) for coupling the inside mirror section and the outside mirror section such that their mirror surfaces become parallel to each other, and an attaching member (22) provided in an intermediate portion of the coupling member and fixed rotatably to the upper end of a front pillar (15) or the like.

## Description

### Technical Field

The present invention relates to an integrated mirror, and particularly to an integrated mirror that makes good rear and rear/side fields of vision of a vehicle such as a car.

### Background Art

Hitherto, when the driver of a car has wanted to know the situation behind the car, the driver has used a rear view mirror such as a room mirror disposed in the middle of the top part of a front window or a side mirror (door mirror or fender mirror) disposed on the left and right side parts of the vehicle body. The room mirror is mainly used to check the field of vision behind the car, and side mirrors and the like are used to check the field of vision to the rear/side of the car. In the disposition of rear view mirrors in the past, structurally the occurrence of a blind angle has been unavoidable, and rechecking of this blind angle part by the driver's own visual inspection has been necessary.

To overcome this, in the past, with the object of enlarging the rear/side field of vision of during driving and reducing the blind angle region, a mirror fitting called a so-called wide mirror, to be attached afterward as an accessory to the room mirror, has been proposed. With this wide mirror, it is possible to obtain simultaneously a wide field of vision including a part of the side in addition to the rear of the car.

Technology for enlarging the field of vision obtained with a rear view mirror is disclosed, for example, in Japanese Utility Model Registration No. 3017776. The rear view mirror (door mirror) disclosed in Japanese Utility Model Registration No. 3017776 has an additionally provided sub-mirror positioned inside the passenger compartment, and makes the field of vision wide and large by a combination of the door mirror and the sub-mirror.

With the conventional rear view mirrors mentioned above, the following problems have arisen.

A first problem is that of the forward blind spot increasing. A wide mirror attached to a room mirror, because it is normally larger than the room mirror, increases the blind angle in relation to the forward field of vision. With a combination of a door mirror and a sub-mirror according to Japanese Utility Model Registration No. 3017776, there was the problem that a glass region which is a glass region lower than eye height important when checking the road surface ahead and is between the front pillar and the door mirror is hidden by the sub-mirror.

A second problem is that adjustment of the rear field of vision is troublesome. When the sitting position of a driver riding in the car and/or the driver's seat position are changed, for the driver to obtain a good field of vision, it is necessary to adjust the room mirror and the left and right side mirrors or the like. This adjustment must be carried out three times. With the door mirror disclosed in Japanese Utility Model Registration No. 3017776 mentioned above, in addition to these three adjustments, it is necessary to consider angular adjustment of the left and right sub-mirrors inside the passenger compartment.

A third problem is that the number of checks of the rear and the rear/side of the car becomes large. At the time of a right turn or the time of a left turn at a junction, in an ordinary traffic situation, it has been necessary for the driver to move his line of sight at least twice and check the room mirror and one of left and right side mirrors. In relation to line of sight movement of the driver, for example, as in the left/up direction to the room mirror, or right/down direction to the right door mirror, it has included large movements of left-right movement and up-down movement. Particularly when it is necessary for the driver to grasp the surrounding situation in detail, such as at a junction, there is a wanting to reduce unnecessary line of sight movements as much as possible.

A fourth problem is that it is necessary for the images reflected in the different rear view mirrors to be combined by the recognition capability of the driver. In using rear view mirrors of the past, when to recognize the rear/side situation the driver constructs an image of it in his head, he has performed a cognition task of first remembering a rear image obtained with the room mirror and then looking at a side image in the side mirror while combining these. In the past, because the installation positions of the room mirror and the side mirror have been far apart, the task of performing spatial recognition on the basis of the images in the different mirrors has been one constituting a large burden.

### Disclosure of the Invention

In the issue of this invention, it solves the first through fourth problems described above, and seeks to lighten the load on a driver driving a car of the task of checking the situation behind, by, while preventing an increase in forward dead angle, lightening the respective adjustment burdens of multiple rear view mirrors, lightening the burden of line of sight movement with respect to each of multiple rear view mirrors, and lightening the burden of the recognition task of combining the respective reflected images of multiple rear view mirrors in the head.

An object of the invention is to achieve the issue described above and provide an integrated mirror for a car with which, when a driver driving the car performs checking of the vehicle situation to the rear or the rear/side of the car when making a change of course or the like, in line of sight movement and recognition of rear reflected images, it is possible to perform the recognition work with a lighter burden than with past vehicles.

According to the present invention, to achieve the above object, there is provided an integrated mirror comprising: an inside mirror part for reflecting an inside field of vision of behind a vehicle; an outside mirror part for reflecting an outside field of vision of behind the vehicle; and coupling means for coupling the inside mirror part and the outside mirror part so that their respective mirror faces are parallel.

In this integrated mirror, the inside mirror part and the outside mirror part are disposed in proximity to each other and coupled and integrally constructed with a coupling member so that their mirror faces have a parallel positional relationship, and are mounted to a front pillar or the like in a movable state. In relation to the rear field of vision of the vehicle, with the inside mirror part a field of vision to the vehicle rear including the inside of the passenger compartment is obtained, and with the outside mirror part a field of vision to the rear/side of the vehicle is obtained. A rear image obtained with the inside mirror part and a rear image obtained with the outside mirror part are made as an integrated and continuous image with no sense of incongruity.

Preferably, in the integrated mirror constructed as above, the inside mirror part and the outside mirror part are optically designed such that the images reflected in their mirror faces are formed on the basis of a common virtual view point and the images reflected in the mirror faces having continuity. With this arrangement, because the mirror faces of the inside mirror part and the outside mirror part are designed with a virtual view point as a reference optically, the rear images reflected in the respective mirror faces can be recognized as a continuous and integrated image.

Desirably, in the integrated mirror arranged as above, the inside mirror part and the outside mirror part move in linkage about an attaching part as a center of rotation. With this construction, in field of vision adjustment of the integrated mirror, if adjustment is carried out by gripping the inside mirror part, it is possible to perform field of vision adjustment of the outside mirror part at the same time, and it becomes possible to reduce the number of adjustments and lighten the adjustment burden.

In the integrated mirror arranged as above, it is preferred that the mirror position is adjustable by moving the inside mirror part. With this construction, the burden of the work of adjusting the rear image reflected in the mirror is lightened.

Preferably, in the integrated mirror arranged as above, the vehicle exterior part is left and right pillars. With this construction, integrated mirrors can be mounted with a simple structure.

In the integrated mirror arranged as above, the inside mirror part and the outside mirror part are preferably disposed at a height above the line of sight of the seated driver. With this construction, without making a blind angle in the field of vision ahead of the vehicle, it becomes possible to obtain a good forward field of view.

In the integrated mirror arranged as above, the inside mirror part and the outside mirror part are preferably disposed at a height above a driver's view point position decided on the basis of predetermined physique data. With this construction, it is possible to obtain a field of view good for the driver ahead of the vehicle.

In the integrated mirror arranged as above, the virtual view point is preferably provided in front of the front pillar and at a vehicle corner part and within a range of height from the ground to the vehicle height. With this construction, so that the field of vision becomes best for the driver, disposition of the integrated mirror suited to his physique becomes possible.

With this invention, because in a car or the like an integrated mirror in which an inside mirror part and an outside mirror part are integrated is mounted rotatably on the upper end or the like of a front pillar or the like, while preventing an increase of the forward blind angle of a front window and that vicinity, it is possible to lighten the burden of mirror adjustment for seeing rearward, lighten the burden of line of sight movement to rear view mirrors, and lighten the burden of the recognition task of combining reflected images obtained with multiple rear view mirrors in the head, and by this means it is possible to lighten the load on a driver driving the car of checking the situation to the rear.

### Brief Description of the Drawings

Fig. 1 is a perspective view as seen from diagonally above of a passenger car having an integrated mirror according to the invention.
Fig. 2 is a view showing schematically a disposition example of integrated mirrors according to the invention in the vicinity of a front window seen looking forward from inside a passenger compartment of the car shown in Fig. 1.
Fig. 3 is a plan view showing schematically integrated mirrors according to the invention mounted to left and right front pillars.
Fig. 4 is a view showing the mounting state of an integrated mirror on a right-side front pillar seen from a driver's seat.
Fig. 5 is a front view showing a representative embodiment of an integrated mirror according to the invention.
Fig. 6 is a plan view of the integrated mirror shown in Fig. 5.
Fig. 7 is a partially sectional plan view showing a mounting relationship between the integrated mirror shown in Fig. 6 and a front pillar.
Fig. 8 is a horizontal sectional view showing a linkage relationship between a universal joint part of an integrated mirror according to an embodiment and a front pillar.
Fig. 9 is a view explaining optically a rear field of vision that can be seen by means of an integrated mirror according to the embodiment.
Fig. 10 is an explanatory view showing a range over which a virtual view point can exist.
Fig. 11 is a front view showing another embodiment of an integrated mirror according to the invention.
Fig. 12 is a front view showing another embodiment of an integrated mirror according to the invention.
Fig. 13 is shows another embodiment of an integrated mirror according to the invention, (A) being a plan view showing a normal state and (B) a state wherein an outside mirror part has tipped rearward.

### Best Modes for Carrying Out the Invention

A preferred embodiment of the invention will now be described on the basis of the accompanying drawings.

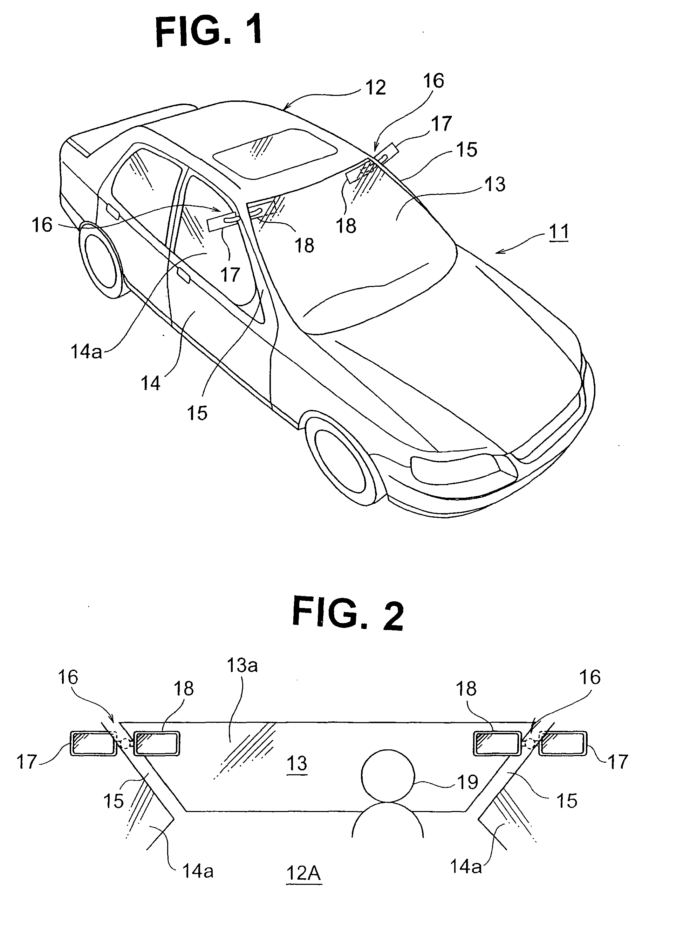

A perspective view of a passenger car having an integrated mirror according to the invention is shown in Fig. 1. The car 11 has a vehicle exterior part (body part) forming a passenger compartment 12. In the passenger compartment 12, a front pillar 15 is provided between a side edge of a front window 13 and a front edge of a door window 14a of a front door 14. A front pillar 15 is provided on both the left and right sides of the front window 13. Normally, the front pillar 15 has a shape such that its upper end slopes toward the rear of the vehicle body. An integrated mirror 16 according to the invention, preferably, is provided at the upper end part of each of the left and right front pillars 15. The integrated mirror 16 has an outside mirror part 17 positioned outside the passenger compartment 12 and an inside mirror part 18 positioned inside the passenger compartment 12.

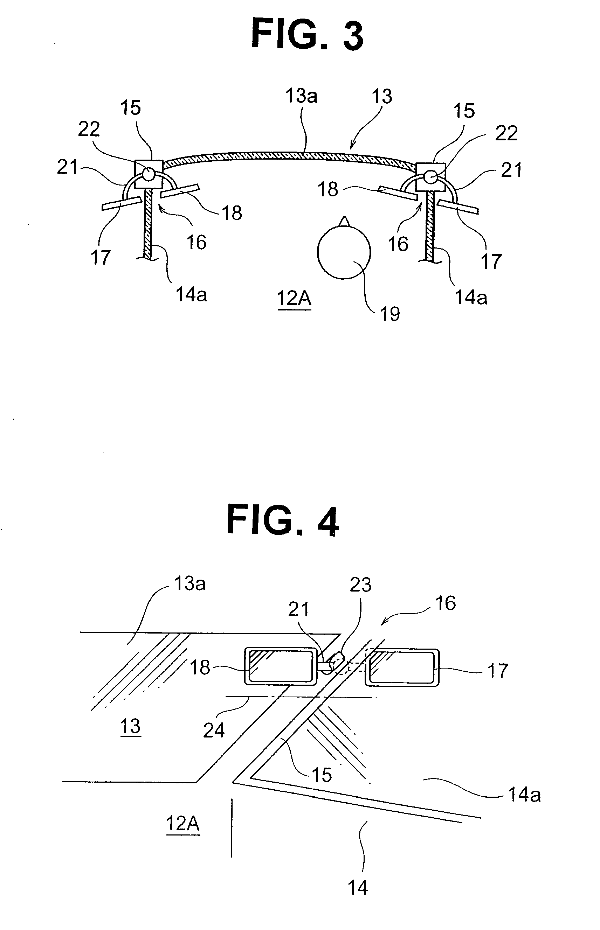

Fig. 2 shows the front window 13 and its vicinity seen from inside the passenger compartment 12. Fig. 3 shows a schematic partially sectional plan view of the vicinity of the front window 13. Fig. 4 shows the mounting state of an integrated mirror 16 at the right-side front pillar 15 seen from inside the passenger compartment.

In Fig. 2, a front glass 13a with both its side edge parts supported by the left and right front pillars 15 is fitted in the front window 13. Integrated mirrors 16 are mounted on upper end parts of the left and right front pillars 15. The left and right integrated mirrors 16 each have an outside mirror part 17 and an inside mirror part 18. A driver 19, while driving the car 11, looks at the two mirror parts 17, 18 of the left and right integrated mirrors 16 when checking the situation to the rear.

In Fig. 3 and Fig. 4, the integrated mirror 16 is mounted by a coupling member 21 of the integrated mirror 16 being passed through a transverse-direction through hole formed in the upper end part of the front pillar 15 and a spherical attaching member 22 in the midsection of the coupling member 21 being rotatably fitted inside the front pillar 15. The coupling member 21 is a member for coupling the outside mirror part 17 and the inside mirror part 18. The transverse-direction through hole in the front pillar 15 is formed relatively large, and rubber packings 23 are provided in its inner-side and outer-side openings. The coupling member 21 disposed passing through the through hole, when the driver 19 moves it about the attaching member 22 by manipulating the inside mirror part 18 by hand, can change the orientation of the mirror in response to that movement. By this means it is possible to change the overall attitude of the integrated mirror 16 to obtain a better rear field of view. As shown in Fig. 4, the mounting position of the integrated mirrors 16 in the front pillars 15, preferably, is set so as to be positioned in a position higher than the height position 24 of the line of sight (eye level) of the driver 19. The rubber packings 23 are provided as things for allowing necessary angle adjustment of the mirror parts 17, 18 while also establishing a seal between inside and outside the passenger compartment, and to achieve this object the through hole in the front pillar 15 may be covered with another part made of plastic or metal or the like.

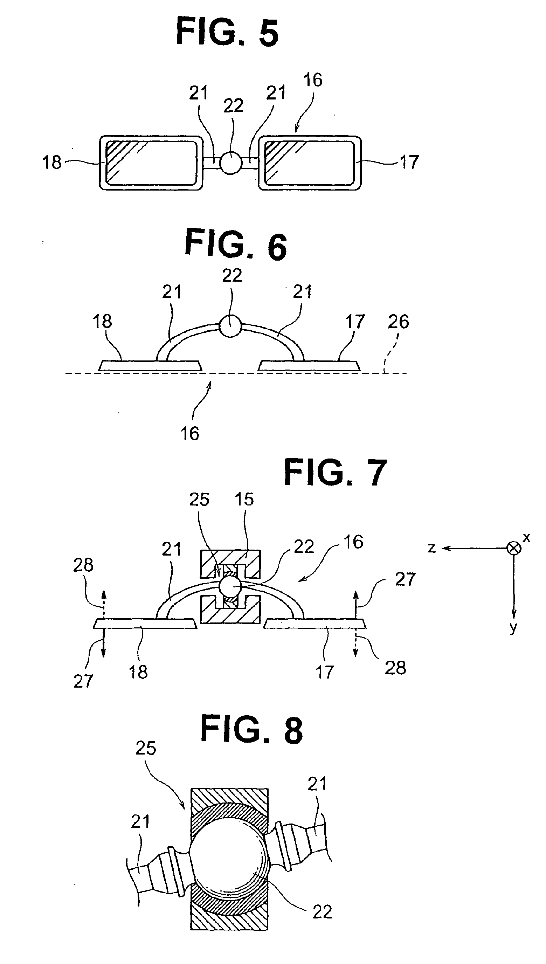

With reference to Fig. 5 to Fig. 8, a basic embodiment of an integrated mirror of the invention will be described. Fig. 5 shows an enlarged front view of an integrated mirror 16, Fig. 6 shows an enlarged plan view of the integrated mirror 16, Fig. 7 shows an enlarged view of the mounting structure of a integrated mirror 16 mounted to a front pillar 15, and Fig. 8 shows a construction view of an attaching member 22. Although in practice the external appearance and the internal construction of the front pillar 15 are complex, to facilitate understanding of the invention, they have been shown simplified as shown in Fig. 2 to Fig. 7.

The integrated mirror 16 is made up of an outside mirror part 17 and an inside mirror part 18, and the two mirror parts 17, 18 are coupled at their back faces using a coupling member 21. In this embodiment, the outside mirror part 17 and the inside mirror part 18 are the same shape. However, the shapes and sizes of the mirror parts can be determined freely. The coupling member 21 is made with a member made of resin or metal or the like having a required rigidity, and has in its middle a spherical attaching member 22. The attaching member 22, as shown in Fig. 7 and Fig. 8, is rotatably supported by a universal joint structure 25 provided inside the front pillar 15.

As is clear from Fig. 6 and Fig. 7, in this embodiment, the mirror face of the outside mirror part 17 and the mirror face of the inside mirror part 18 are in a relationship such that they are included in the same flat plane (mirror face: line 26). In this invention, the mirror face of the outside mirror part 17 and the mirror face of the inside mirror part 18 do not necessarily have to be in the same plane, and it is sufficient if they are at least kept in a parallel relationship.

In an integrated mirror 16 having the construction described above, when adjusting the rear field of view, for example when the driver 19 grips the inside mirror part 18 and moves it while looking at the rear image reflected in the mirror face of the inside mirror part 18 so that that becomes optimal, the outside mirror part 17 also moves at the same time, and the rear image reflected in mirror face of that is also adjusted simultaneously.

In Fig. 7, the arrow 27 shows counterclockwise rotation and the arrow 28 shows clockwise rotation. The attaching member 22 is not limited to rotation about one axis (an x axis), and is provided rotatably also about other axes (a y axis, a z axis).

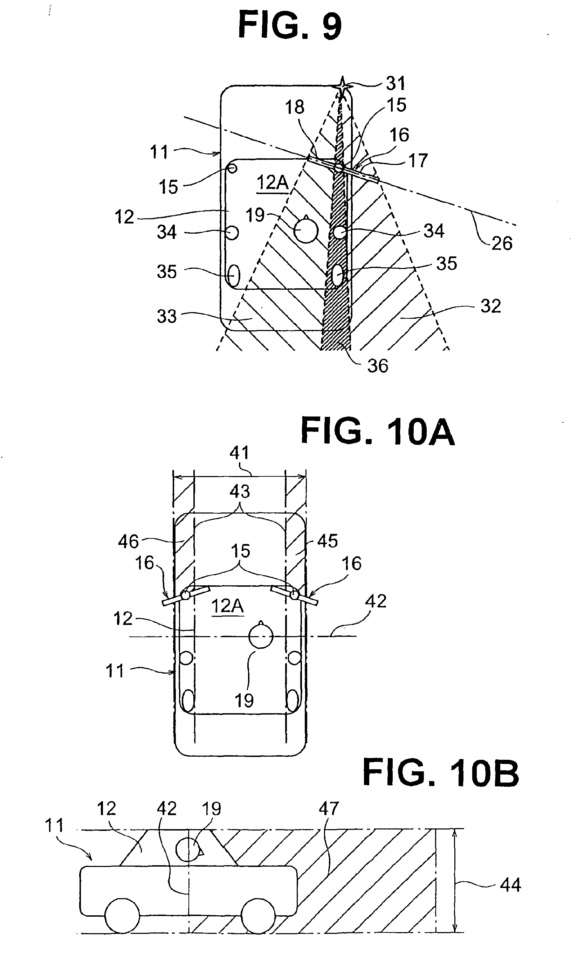

With reference to Fig. 9 a rear field of view that can be seen with the integrated mirror 16 will be explained optically. Here, the sizes, mounting positions, angles and so on of the mirror parts 17, 18 are decided so that the field of view acquisition (including the forward field of view) around the driver is optimal, taking into account various parameters such as the overall length, overall width of the car 11, the size of the passenger compartment 12, the positional relationship between the front pillar 15 and the driver's seat, the rear field of view angles 32, 33 wanted to be obtainable from the integrated mirror 16, and the reflecting characteristics of the mirror parts 17, 18. At this time, a virtual position concept called a virtual view point 31 is used. The rear/side regions of the vehicle blocked by the integrated mirror 16 when seen from the virtual view point 31 are the regions that the driver 19 can see via the integrated mirror 16. By utilizing the concept of the virtual view point 31 like this, it is possible easily and precisely to perform setting/adjustment of the field of view that the driver 19 can obtain.

The virtual view point 31, for example, with the single dot chain line 26 shown in Fig. 9 as a centerline, is the point line-symmetrical with the position of the eyes of the driver 19 (a standard physique) seated in the driver's seat position, and is a point set in front of the front pillar 15. As shown in Fig. 9, the field of vision angles 32, 33 decided by the lines connecting the virtual view point 31 to the ends of the mirror parts 17, 18 are the rear and rear/side field of vision angles obtained from the driver 19. Accordingly, it is possible to decide necessary field of vision angles 32, 33 in accordance with the size and so on of the car 11, and decide the transverse-direction width dimensions of the mirror parts 17, 18 so as to obtain these field of vision angles 32, 33. The field of vision angle 32 corresponds to an outside field of vision, and the field of vision angle 33 corresponds to a field of vision inside the passenger compartment.

The 'standard physique' mentioned above, speaking in relation to Japanese people, for example can be decided on the basis of measured physique data based on an ample modulus such as 'Body Measurement Data of Japanese' 1992 to 1994, published by the Human Life Engineering Research Center organization. The '3-dimensional position of the driver's view point in a standard physique' that constitutes the setting reference of the virtual view point 31 can be specified by multiple test subjects having a standard physique of the kind mentioned above performing driver's seat adjustment multiple times. That is, after a standard physique of the target customer class of the vehicle in which the invention is to be employed is calculated, by a driver having that physique the virtual view point 31 is decided so that the field of vision becomes best.

In correspondence with increasing of the orientedness of customers in recent years, the front pillar design may be customized to suit individual customers. In this case, physique data of a customer is acquired before the vehicle is manufactured, and disposition of the virtual view point 31 and the integrated mirrors 16 is carried out so that a third party having that physique or the customer himself thinks them optimum from the point of view of field of vision.

If the sizes and shapes and mounting positions of the mirror parts 17, 18, and the virtual view point 31, are decided on the basis of an average physique of the target buying class of the vehicle in which the integrated mirror of the invention is to be employed, it is possible to realize a more comfortable outside visibility environment.

Because the integrated mirror 16 is mounted rotatably as already mentioned, it is also possible to adjust the field of vision angles 32, 33 as necessary in accordance with differences in the physique and the preferences of the driver 19.

As described above, in this invention, it is possible to survey the rear field of vision of the car 11 simultaneously with the mirror faces of the outside mirror part 17 and the inside mirror part 18 of the integrated mirror 16. At this time, the height position of the virtual view point 31 is made the position of the roof of the passenger compartment 12. With the outside mirror part 17 it is possible to see an outside field of vision (rear/side field of vision) 32, and with the inside mirror part 18 it is possible to see an inside field of vision 33. The outside field of vision 32 is about the same as the angle range that can be seen with a door mirror or the like of related art, and the inside field of vision 33 is an angle range that the passenger-seat-side edge part of the rear window is inside.

Because the virtual view point 31 described above is in front of the front pillar 15, a middle pillar 34 and a rear pillar 35, the dead angle 36 made by these pillars 15, 34, 35 is kept to a minimum. B the integrated mirror 16 being provided at the upper end part of the front pillar 15, it is possible to prevent a reduction in the front field of vision caused by the mirror part 18 and a reduction in the rear field of vision caused by the head of the driver 19. More preferably, the integrated mirror 16 is mounted on the upper end part of the front pillar 15 and in a position higher than the top of the head of the driver 19.

As mentioned above, in the optical design of the mirror faces of the outside mirror part 17 and the inside mirror part 18 in an integrated mirror 16 according to this embodiment, design is carried out so that the rear images reflected in the mirror faces have a common virtual view point 31.

For the rear field of vision of the integrated mirror 16 on the left side (the passenger seat side), on the basis of setting the virtual view point similarly in a position in front of the left side of the vehicle body of the car 11, it is set in a positional relationship of approximate line symmetry with the rear field of vision of the integrated mirror 16 on the right side.

In (A), (B) of Fig. 10, in relation to a vehicle width range 41 relating to the vehicle body of the car 11, a line 42 showing a position relating to the eyes of the driver 19, lines 43 near the vehicle centerline sides of the front pillars 15, and a vehicle height range 44, a region 45 is a range over which the right virtual view point 31 can be set, a region 46 is a range over which the left virtual view point can be set, and a region 47 is a range over which the left and right virtual view points can be set in the height direction. Normally, because the driver 19 has to be fully aware of nearby vehicles and pedestrians, in many cases it is desirable for the height of the virtual view point 31 to be made approximately the same height as the view point height of the driver 19.

Although in the embodiment described above a construction was adopted in which the left and right integrated mirrors 16 were mounted on upper end parts of the front pillars 15, the mounting location is not limited to this. Besides this, they can be mounted on the passenger compartment 12 or vehicle exterior parts around that such as the front glass, the side glass (door glass), a roof part, or a sunroof part.

Although the use of flat mirrors for the mirror faces of the outside mirror part 17 and the inside mirror part 18 of the integrated mirror 16 is a premise, it is not limited to this. For example convex mirror faces projecting in the horizontal direction can be used. In this case, the size of the mirror part can be made small while maintaining the same field of vision angle as a flat mirror. Also, convex mirror faces projecting in the vertical direction can alternatively be used. In this case, it is possible to enlarge the field of vision angle in the vertical direction and enlarge the field of vision to the ground directly below the mirror.

With the embodiment described above, because the whole of the integrated mirror 16 has been made higher than the height position of the eyes of the driver 19, to the driver 19 there ceases to be any dead angle with respect to the travel road in front, and the front field of vision can be made large. When the inside mirror part 18 is adjusted, the outside mirror part 17 also moves in linkage with it, and essentially just by adjusting twice the left and right inside mirror parts 18 the whole can be adjusted easily.

Also, the outside mirror part 17 and the inside mirror part 18 of the left and right integrated mirrors 16 are disposed in proximity in positions inside and outside the passenger compartment 12A, when the integrated mirrors 16 are viewed it is possible to instantly join/combine the rear images reflected in each of the two mirror parts 17, 18 without relying on memory, and the burden of spacial awareness of the driver can be lightened. By the driver 19, the rear images reflected in the outside mirror part 17 and the inside mirror part 18 can be recognized continuously, and the mirror images inside and outside the passenger compartment can be joined mentally with no sense of incongruity. Also, as a result of the concept of the virtual view point 31 being introduced, setting of the sizes and mounting positions of the integrated mirrors 16 becomes easy.

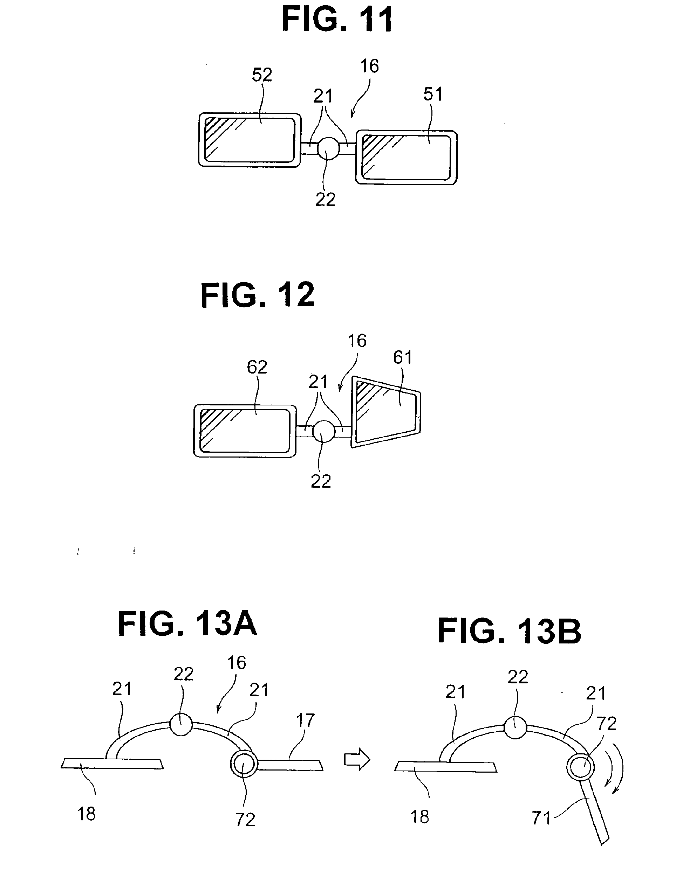

Next, another embodiment of an integrated mirror according to the invention is shown in Fig. 11 to Fig. 13. The integrated mirror 16 shown in Fig. 11 is one in which an outside mirror part 51 and an inside mirror part 52 of the same shape have been positioned at different heights. With the mirror faces of the mirror parts 51, 52 kept parallel, their positions can also be staggered in the front-rear direction. In the integrated mirror 16 shown in Fig. 12, the shape of the outside mirror part 61 has been shaped as a different one with respect to the inside mirror part 62. In this way, the shapes of the mirror parts inside and outside the passenger compartment can be set freely. In the integrated mirror 16 shown in Fig. 13(A), the outside mirror part 71 is coupled to the coupling member 21 by a pivoting joint 72. With this construction, as shown in Fig. 13(B), during parking and when touching an obstruction, it can tip rearward. A construction can also be adopted such that tipping rearward of the outside mirror part 71 is carried out automatically by a motor. Also, if a construction is adopted wherein the attaching member 22 shown in Fig. 8 slides up and down in the length direction of the front pillar 15, a better field of view can be obtained in correspondence with the driver 19. Control of the integrated mirrors 16 can be carried out electrically in the same way as known door mirror drive mechanisms.

The constructions, shapes, sizes and dispositional relations described in the foregoing embodiments are shown to a level such that it is possible to understand and work the invention, and the invention is not limited to the embodiments described, and it is possible to change it to various forms as long as it does not deviate from the scope of the technological idea shown in the scope of the patent claims.

### Industrial Applicability

This invention is used when while driving an automotive vehicle a driver or the like obtains the situation to the rear or to the rear and side of the vehicle.

## Claims

1. An integrated mirror comprising:
an inside mirror part for reflecting an inside field of vision of behind a vehicle;
an outside mirror part for reflecting an outside field of vision of behind the vehicle; and
coupling means for coupling the inside mirror part and the outside mirror part such that their respective mirror faces are parallel.

2. The integrated mirror of claim 1, wherein the inside mirror part and the outside mirror part are optically designed such that images reflected in their mirror faces are formed on the basis of a common virtual view point determined in correspondence with a driver's view point position determined using predetermined physique data, and the images reflected in the mirror faces have continuity.

3. The integrated mirror of claim 1 or 2, further comprising attaching means provided part-way along the coupling means and mounted rotatably in an upper part of the vehicle exterior part, and the inside mirror part and the outside mirror part move in linkage about the attaching means as a center of rotation.

4. The integrated mirror of claim 3, wherein the mirror position is adjustable by moving the inside mirror part.

5. The integrated mirror of one of claims 1 to 4, wherein the vehicle exterior part is left and right front pillars.

6. The integrated mirror of one of claims 1 to 5, wherein the inside mirror part and the outside mirror part are disposed at a height above the line of sight of a seated driver.

7. The integrated mirror of one of claims 2 to 6, wherein the inside mirror part and the outside mirror part are disposed at a height above the driver's view point position decided on the basis of predetermined physique data.

8. The integrated mirror of one of claims 5 to 7, wherein the virtual view point is provided in front of the front pillar and at a vehicle corner part and within a range of height from the ground to the vehicle height.

## Amended claims

### Amended claims under Art. 19.1 PCT

1. (amended) An integrated mirror comprising:
an inside mirror part for reflecting an inside field of vision of behind a vehicle;
an outside mirror part for reflecting an outside field of vision of behind the vehicle; and
coupling means for coupling the inside mirror part and the outside mirror part so that their respective mirror faces are parallel,
**characterized in that** the inside mirror part and the outside mirror part are optically designed such that images reflected in their mirror faces are formed on the basis of a common virtual view point determined in correspondence with a driver's view point position determined using predetermined physique data, and the images reflected in the mirror faces have continuity, and are disposed at a height above the driver's sight position of a seated driver.

2. (cancelled)

3. (amended) The integrated mirror of claim 1, further comprising attaching means provided part-way along the coupling means and mounted rotatably in an upper part of the vehicle exterior part, and the inside mirror part and the outside mirror part move in linkage about the attaching means as a center of rotation.

4. The integrated mirror of claim 3, wherein the mirror position is adjustable by moving the inside mirror part.

5. (amended) The integrated mirror of claim 1, 3 or 4, wherein the vehicle exterior part is left and right front pillars.

6. (cancelled)

7. (cancelled)

8. (amended) The integrated mirror of claim 5, wherein the virtual view point is provided in front of the front pillar and at a vehicle corner part and within a range of height from the ground to the vehicle height.
